(19) Europäisches Patentamt
European Patent Office
Office européen des brevets

(11) Veröffentlichungsnummer: **0 173 207**
**B1**

(12) # EUROPÄISCHE PATENTSCHRIFT

(45) Veröffentlichungstag der Patentschrift: **19.09.90**

(51) Int. Cl.$^5$: **C 08 G 73/14**

(21) Anmeldenummer: **85110357.2**

(22) Anmeldetag: **19.08.85**

(54) **Polyamidimide mit modifizierten Endgruppen.**

(30) Priorität: **30.08.84 DE 3431858**

(43) Veröffentlichungstag der Anmeldung:
**05.03.86 Patentblatt 86/10**

(45) Bekanntmachung des Hinweises auf die Patenterteilung:
**19.09.90 Patentblatt 90/38**

(84) Benannte Vertragsstaaten:
**DE FR GB IT NL**

(56) Entgegenhaltungen:
**DE-A-2 009 626**
**DE-B-1 770 202**
**DE-B-1 795 752**
**DE-B-1 956 512**
**GB-A- 988 828**
**US-A-3 238 181**

(73) Patentinhaber: **BAYER AG**
**D-5090 Leverkusen 1 Bayerwerk (DE)**

(72) Erfinder: **Zecher, Wilfried, Dr.**
**Treptowerstrasse 6**
**D-5090 Leverkusen 1 (DE)**
Erfinder: **Reinking, Klaus, Dr.**
**Robert-Stolz-Strasse 16 b**
**D-5632 Wermelskirchen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 173 207 B1

**Beschreibung**

Die Erfindung betrifft ein Verfahren zur Herstellung von Polyamidimiden und deren Verwendung als Kunststoffe.

Es ist bekannt, daß aliphatisch-aromatische Polyamidimide, hergestellt durch Umsetzung von Polyisocyanaten mit cyclischen Polycarbonsäureanhydriden und Lactamen (DE—AS 1 770 202) oder Polyamiden (DE—AS 1 956 512), besondere Eigenschaften wie hohe Erweichungstemperaturen und gute Elastizitätswerte besitzen und als hochtemperaturbeständige Beschichtungen, z.B. auf dem Elektroisolierlack-Sektor, Verwendung finden können.

Es wurde nun gefunden, daß Polymere mit ausgezeichneten Eigenschaften, insbesondere bei der Verwendung als Thermoplaste, erhalten werden, wenn die Kondensation von organischen Polyisocyanaten wie aliphatischen, aliphatisch aromatischen und aromatischen Diisocyanaten mit cyclischen Polycarbonsäureanhydriden und Lactamen oder Polyamiden bei Temperaturen von 0—400°C und gegebenenfalls in einem Lösungsmittel zusammen mit 0,1—10, vorzugsweise 0,2—4 Val-% einer Imidcarbonsäure der Formel (I)

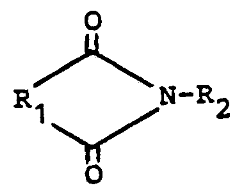

(I),

in welcher $R_1$ und $R_2$ aliphatische, aliphatisch-aromatische oder aromatische Reste bedeuten und in der $R_1$ neben der cyclischen Imid-Gruppe mindestens noch eine cyclische Anhydrid-Gruppe oder Carboxyl-Gruppe trägt, ausgeführt wird.

Es wurde weiterhin gefunden, daß diese Polymere z.B. in Lösungsmitteln hergestellt und dann in einem Eindampfextruder bei Temperaturen von 250—400°C, gegebenenfalls unter Vakuum, aufkonzentriert werden können.

Die erfindungsgemäß hergestellten Polyamidimide zeichnen sich durch gute mechanische Werte wie Wärmeformbeständigkeit und Schlagzähigkeit, gutes Brandverhalten, hohe Kriechstromfestigkeit, helle Farbe, erhöhte Zersetzungstemperaturen und gutes Fließverhalten aus. Das Verfahren ermöglicht auch den Einbau von Endgruppen über Amine, deren Isocyanate schwer zugänglich sind oder wegen ihrer Leichtflüchtigkeit bei der Umsetzung Schwierigkeiten bereiten können.

Die erfindungsgemäß verwendbaren Imidocarbonsäuren sind z.B. aus den entsprechenden Polycarbonsäuren oder Carbonsäure-Carbonsäureanhydriden, z.B. Trimellitsäureanhydrid, und den Aminen zugänglich. Sie können getrennt oder "in situ" hergestellt werden.

Als erfindungsgemäß verwendbare Imidocarbonsäuren können Verbindungen eingesetzt werden, die der Formel (I)

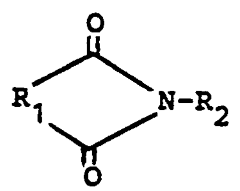

(I)

entsprechen, in welcher

$R_1$ einen gegebenenfalls weiter substituierten aliphatischen $C_2$—$C_{20}$-Rest, cycloaliphatischen $C_5$—$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen mit mindestens einer Carboxyl- oder cyclischen Carbonsäureanhydrid-Gruppe und

$R_2$ einen gegebenenfalls substituierten aliphatischen $C_1$—$C_{25}$-Rest, cycloaliphatischen $C_5$—$C_{10}$-Rest, einen aliphatisch-aromatischen Rest mit 1—20 C-Atomen im aliphatischen Teil und 6 bis 10 C-Atomen im aromatischen Teil oder einen aromatischen Rest mit 6—10 C-Atomen oder einen polymeren Rest bedeuten.

Als Beispiele seien für $R_1$ die Reste von Propan, Butan, Benzol, Diphenyl und Naphthalin aufgeführt.

Besonders bevorzugt werden die N-substituierten Derivate der Trimellitimidocarbonsäure (II)

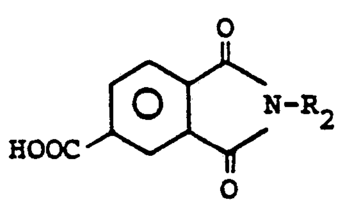

(II),

eingesetzt, in der $R_2$ die bei Formel (I) aufgeführte Bedeutung hat.

Als Beispiele für $R_2$ seien die Reste von Methan, Ethan, n-, iso-, tert.-Butan, Hexan, Dodecan, Octadecan, Propren, Butin, Cyclohexan, Benzol, Naphthalin, Diphenylether, ω- oder kernsubstituiertes Toluol, Dodecylbenzol oder Polyethern genannt, die einfach oder mehrfach mit Halogen wie Fluor, Chlor, Brom oder Fluoralkyl-, Alkyl-, Aryl-, Hydroxy-, Alkoxy- oder Aroxy-Gruppen substituiert sein können.

Für das erfindungsgemäße Verfahren können vorzugsweise Polyisocyanate eingesetzt werden, wie sie beispielsweise in der DE—OS 1 770 202 beschrieben sind.

Besonders bevorzugt werden phosgenierte Kondensate aus Anilin und Formaldehyd mit Polyphenylen-methylen-Struktuten, technische Gemische aus Toluylendiisocyanaten, m-Phenylendiisocyanat und symmetrische Verbindungen wie 4,4'-Diisocyanatodiphenylmethan, 4,4'-Diisocyanatodiphenylether, Naphthylen-(1,5)-diisocyanat, p-Phenylendiisocyanat, 4,4'-Diisocyanato-diphenyldimethylmethan, analoge hydro-aromatische Diisocyanate wie 4,4'-Diisocyanato-dicyclohexylmethan sowie aliphatische Diisocyanate mit 2—12 C-Atomen wie Hexamethylendiisocyanat und isomere Trimethylhexamethylendiisocyanate und von Isophoron abgeleitete Diisocyanate oder deren Gemische.

Eine besondere Ausführungsform besteht in der Verwendung von Gemischen aus 40—95 Gew.-% eines aromatischen Diisocyanats, z.B. 4,4-Diisocyanato-diphenylmethan oder 2,4- oder 2,6-Toluylendiisocyanat und 5—60 Gew.-% eines aliphatischen Diisocyanats, z.B. 4,4'-Diisocyanato-dicyclohexylmethan, Isophoron-diisocyanat, Hexamethylendiisocyanat und Trimethyl-hexamethylendiisocyanat und von Gemischen von 40—95 Gew.-% 4,4'-Diisocyanatodiphenylmethan und 5—60 Gew.-% 2,4- und/oder 2,6-Toluylendiisocyanat oder von deren technischen Gemischen.

Anstelle der Isocyanate können auch Verbindungen eingesetzt werden, die unter den Reaktionsbedingungen als Isocyanate reagieren, vorzugsweise die Additionsverbindungen von Alkoholen, Phenolen und Lactamen, z.B. von Phenol, technischen Kresolgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbodiimide und Isocyanatoisocyanurate aus den beschriebenen Polyisocyanaten.

Als cyclische Polycarbonsäureanhydride für das erfindungsgemäße Verfahren können Verbindungen verwendet werden, wie sie in DE—OS 1 770 202 und DE—OS 2 542 706 beschrieben werden, vorzugsweise Polycarbonsäureanhydride der Formel (III)

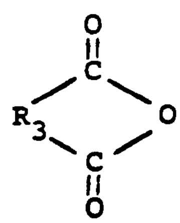

(III),

in welcher $R_3$ einen gegebenenfalls substituierten aliphatischen $C_2$—$C_{20}$-Rest, cycloaliphatischen $C_5$—$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt, bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Erfindungsgemäß verwendbare Lactame sind beispielsweise solche der Formel (IV)

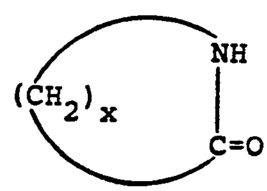

(IV),

in welcher x eine ganze Zahl von 2 bis 20 bedeutet.

Vorzugsweise wird Caprolactam eingesetzt.

Anstelle oder in Kombination mit den Lactamen können Polyamide eingesetzt werden, wie sie in DAS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und Terephthalsäure und Diaminen wie Ethylendiamin, Hexamethylendiamin, Decamethylendiaminen und m-

und p-Phenylendiamin. Bevorzugt verwendet werden Polycapronamid (Nylon 6) und Polyhexamethylenadipamid (Nylon 66).

Die erfindungsgemäße Reaktion kenn in Lösungsmitteln erfolgen, wie dies in DE—AS 1 770 202 beschrieben wird. Bevorzugt werden als Lösungsmittel Phenole wie Phenol und technische Gemische aus o-, m- und p-Kresolen verwendet, weiterhin Lactame wie Caprolactam oder N-Methylcaprolactam, Butyrolacton und Tetramethylensulfon. Zur Ausführung der erfindungsgemäßen Reaktion werden die Reaktionskomponenten mit oder ohne Lösungsmittel einige Minuten bis zu mehreren Stunden bei Temperaturen von 0—400°C gehalten. Der Verlauf der Reaktion läßt sich beispielsweise über die Gasentwicklung, den Anstieg der Viskosität und die IR-Spektren verfolgen.

Als besonders geeignet haben sich erfindungsgemäß hergestellte Polyamidimide mit einer relativen Viskosität, gemessen an einer 1 %igen Lösung in Kresol bei 25°C, von 1,5 bis 3,0, vorzugsweise von 1,7 bis 2,6 mPas, erwiesen.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestellt, dann aus der Lösung mit einem Nichtlöser wie z.B. Methanol gefällt und eventuell noch auf einem Extruder nachkondensiert werden.

Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren oder unter Druck zu arbeiten, 1—10 Stunden auf eine Temperatur von 200—250°C, vorzugsweise von 210—230°C, zu erhitzen und den restlichen Konzentrationsvorgang, gegebenenfalls unter Nachkondensation, in einem Eindampfextruder, gegebenenfalls unter Vakuum, bei Temperaturen von 240—400°C, vorzugsweise von 280—350°C, auszuführen.

Im allgemeinen werden pro Val Isocyanat ein Val Carbonsäure oder cyclisches Carbonsäureanhydrid einschließlich der 0,1—10 Val-% Imidocarbonäure und pro Val Carbonsäureanhydrid 0,5—2 Val Lactam oder Amid zur Umsetzung gebracht.

Eine weitere mögliche Ausführungsform besteht darin, überschüssiges Isocyanat mit Di- oder Tricarbonsäuren, z.B. Adipinsäure, Terephthalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit andeständigen Hydroxygruppen zur Reaktion zu bringen.

Die Herstellung der erfindungsgemäßen Polymeren kann durch Katalysatoren beeinflußt werden, z.B. durch Amine wie Triethylamin, 1,4-Diazobicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen(III)-chlorid, Kobaltacetat, Bleioxid, Bleiacetat, Zinnoctoat, Dibutylzinn-dilaurat, Kupferacetylacetonat, Titantetrabutylat, Alkali-phenolate und Natriumcyanid und durch Phosphorverbindungen wie Trialkylphosphin und Methylenphospholinoxid.

Die erfindungsgemäßen Polyamidimide zeichnen sich durch besondere Zugfestigkeit, E-Moduli und Wärmeformbeständigkeit aus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern und weiteren Polymeren variiert werden. Insbesondere für die Verwendung als Thermoplaste hat sich die Zumischung von Lactamen wie z.B. Dodecanlactam und Phenolen wie Dodecylphenol als vorteilhaft erwiesen.

## BEISPIELE

### Beispiel 1

In eine Lösung von 113 g Caprolactam in 380 g einer Mischung aus gleichen Teilen Phenol und einem Gemisch technischer Kresole werden bei 120—130°C 225 g 4,4'-Diisocyanatodiphenylmethan, 17,4 g einer Mischung aus 80% 2,4- und 20% 2,6-Toluylendiisocyanat, 7,18 g N-Dodecyltrimellitsäureimid und 190 g Trimellitsäureanhydrid eingetragen. Die Kondensation zum Polyamidimid wird unter Rühren in 2 Stunden bei 170°C, 2 Stunden bei 190°C und 4 Stunden bei 205°C ausgeführt. Anschließend werden unter leichtem Vakuum 225 g des Lösungsmittels abdestilliert und der Rückstand 4 Stunden auf 215°C erhitzt. Beim Erkalten erhält man ein sprödes Harz mit einem Festgehalt von ca. 75 Gew.-%. Die Viskosität $\eta^{25}$ einer 15 %igen Lösung in Kresol beträgt 850 mPas.

Eine Probe des Harzes wird im Stickstoffstrom zuerst bei 250 und dann bei 300°C eingedampft. Man erhält ein transparentes schmelzbares und elastisches Harz mit einer relativen Viskosität $\eta$ = 2,10, gemessen bei 25°C an einer 1 %igen Lösung in Kresol.

### Beispiel 2

Die Herstellung des Harzes erfolgt entsprechend Beispiel 1. Als Imidocarbonsäure werden 2,60 g N-[3,3,5-Trimethylcyclohexyl]-trimellitsäureimid eingesetzt. Man erhält ein sprödes braunes Harz mit einer Viskosität $\eta^{25}$ = 530 mPas, gemessen an einer 15 %igen Lösung des Harzes in Kresol. 100 g des Harzes werden im Stickstoffstrom zuerst bei 250 und dann bei 300°C eingedampft. Man erhält ein hellbraunes

elastisches Harz mit einer relativen Viskosität η = 1,85, gemessen bei 25°C an einer 1 %igen Lösung in Kresol.

Beispiel 3

Die Herstellung des Harzes erfolgt entsprechend Beispiel 1. Als Imidocarbonsäure werden 4,43 g N-Octadecyltrimellitsäureimid eingesetzt. Das Polyamidimid wird als sprödes Harz mit einem Festgehalt von ca. 75 Gew.-% erhalten. Die Viskosität $\eta^{25}$ einer 15 %igen Lösung in Kresol beträgt 1030 mPas. 100 g des Harzes werden in der Schmelze mit 2 g eines Gemisches technischer Nonylphenole versetzt und im Stickstoffstrom zuerst bei 250 und dann bei 300°C eingedampft. Als Rückstand wird ein schmelzbares elastisches Harz mit einer relativen Viskosität η = 2,15 erhalten.

Beispiel 4

In 375 g Phenol/Kresol (1:1) werden 90 g Polycapronamid (Nylon 6) gelöst, dann werden bei 120—130°C 250 g 4,4'-Diisocyanatodiphenylmethan, 24,24 g N-[2-Ethylhexyl]-trimellitsäureimid und 184 g Trimellitsäureanhydrid eingetragen. Anschließend wird unter Rühren 2 Stunden auf 170°C, 2 Stunden auf 190°C und 8 Stunden auf 205°C erhitzt. Danach wird mit 690 g Phenol/Kresol (1:1) auf einen Festgehalt von ca. 30 Gew.-% verdünnt. Man erhält das Polyamidimid als hellbraune viskose Lösung. Die Viskosität $\eta^{25}$ einer 15 %igen Lösung in Kresol beträgt 390 mPas.

Eine Probe der Lösung wird mit Kresol auf einen Festgehalt von 20 Gew.-% verdünnt und in Methanol eingerührt. Man erhält das Polyamidimid als gelbes Pulver, das bei 300°C zu einem harten gelbbraunen Harz aufgeschmolzen wird.

Beispiel 5

In die Lösung von 1130 g Caprolactam in 3800 g Phenol/Kresol (1:1) werden bei 120—130°C 174 g eines technischen Gemisches aus 80 Gew.-% 2,4- und 20 Gew.-% 2,6-Toluylendiisocyanat, 2250 g 4,4'-Diisocyanatodiphenylmethan, 53,4 g N-Phenyl-trimellitsäureimid und 1900 g Trimellitsäureanhydrid eingetragen. Danach wird 2 Stunden bei 190°C und 4 Stunden bei 200—205°C gerührt. Anschließend werden unter vermindertem Druck 2260 g des Lösungsmittelgemisches abdestilliert und der Rückstand 2 Stunden bei 215°C nachkondensiert. Dann werden 139 g Dodecanlactam eingerührt. Man erhält das Polyamidimid als sprödes braunes Harz mit einem Festgehalt von ≈75 Gew.-%. Die Viskosität $\eta^{25}$ einer 15 %igen Lösung in Kresol beträgt 650 mPas. Das Harz wird mit einer Schneidmühle zerkleinert und mit einem Eindampfextruder vom Typ ZSK 32 aufkonzentriert. Dabei beträgt die maximale Manteltemperatur 330°C und der Druck in der Eindampfzone 10 mbar. Man erhält ein transparentes elastisches Harz mit einer relativen Viskosität von 2,13, gemessen bei 25°C an einer 1 %igen Lösung in Kresol.

Beispiel 6

Die Herstellung des Harzes erfolgt entsprechend Beispiel 5. Als Imidocarbonsäure werden 8,70 g N-[4-Dodecylphenyl]-trimellitsäureimid eingesetzt. Das Polyamidimid wird als sprödes Harz mit einem Festgehalt von ca. 75 Gew.-% erhalten. Die Viskosität $\eta^{25}$ einer 15 %igen Lösung in Kresol beträgt 720 mPas. Eine Lösung in Methanphosphonsäuredimethylester zeigt bei 1715 und 1775 $cm^{-1}$ die für Imide charakteristischen Banden.

Eine Probe des Harzes wird im Stickstoffstrom zuerst bei 250 und dann bei 300°C eingedampft. Man erhält ein elastisches schmelzbares Harz mit einer relativen Viskosität η = 2,03, gemessen bei 25°C an einer 1 %igen Lösung in Kresol.

Beispiel 7

In 390 g Kresol und 113 g Caprolactam werden bei 120°C 131 g 4,4'-Diisocyanatodicyclohexylmethan, 125 g 4,4'-Diisocyanatodiphenylmethan, 4,10 g Trimellitsäureimid und 190 g Trimellitsäureanhydrid eingetragen. Dann wird jeweils 2 Stunden bei 170 und 190°C und 4 Stunden bei 200—205°C gerührt. Anschließend werden unter Vakuum 230 g Lösungsmittel abdestilliert und der Rückstand noch 4 Stunden auf 215°C erhitzt. Das Polyamidimid wird als sprödes Harz mit einem Festgehalt von ca. 75 Gew.-% erhalten. Die Viskosität $\eta^{25}$ einer 15 %igen Lösung in Kresol beträgt 590 mPas.

Eine Probe des Harzes wird im Stickstoffstrom bei 250 und 300°C eingedampft. Man erhält ein schmelzbares elastisches Harz mit einer relativen Viskosität η = 1,98.

Beispiel 8

Die Herstellung des Harzes erfolgt entsprechend Beispiel 7. Als Imidocarbonsäure werden 5,62 g N-Benzyl-trimellitsäureimid eingesetzt. Man erhält ein sprödes Harz mit einem Festgehalt von 75 Gew.-% und einer Viskosität $\eta^{25}$ = 620, gemessen an einer 15 %igen Lösung in Kresol.

Eine Probe des Harzes ergibt beim Eindampfen im Stickstoffstrom bei 250 und 300°C ein elastisches Harz mit der relativen Viskosität η = 2,06.

**Patentansprüche**

1. Verfahren zur Herstellung von Polyamidimiden aus Polyisocyanaten, cyclischen

Polycarbonsäureanhydriden und Lactamen oder Polyamiden bei Temperaturen von 0—400°C und gegebenenfalls in einem Lösungsmittel, dadurch gekennzeichnet, daß die Kondensation unter Zumischung von 0,1—10 Val-% einer Imidcarbonsäure der Formel (I)

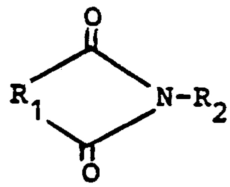

(I),

in welcher $R_1$ und $R_2$ aliphatische, aliphatisch-aromatische oder aromatische Reste bedeuten und in der $R_1$ neben der cyclischen Imid-Gruppe mindestens noch eine cyclische Anhydrid-Gruppe oder Carboxyl-Gruppe trägt, ausgeführt wird.

2. Verfahren zur Herstellung von Polyamidimiden nach Anspruch 1, dadurch gekennzeichnet, daß die Polyamidimide in einer ersten Stufe in einem Lösungsmittel hergestellt, gegebenenfalls unter Druck oder nach Aufkonzentration auf Temperaturen von 200—250°C erhitzt und dann in einem Eindampfextruder bei Temperaturen von 240—400°C, gegebenenfalls unter Vakuum, aufkonzentriert und auskondensiert werden.

3. Verfahren zur Herstellung von Polyamidimiden nach Anspruch 1, dadurch gekennzeichnet, daß als Imidcarbonsäuren Verbindungen der Formel (II)

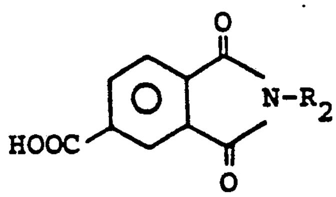

(II),

in welcher $R_2$ einen aliphatischen, aliphatisch-aromatischen oder aromatischen Rest bedeutet, eingesetzt werden.

4. Polyamidimide erhältlich nach Anspruch 1.

5. Verwendung von Polyamidimiden nach Anspruch 1 als Thermoplaste.

**Revendications**

1. Procédé de production de polyamide-imides à partir de polyisocyanates, d'anhydrides d'acides polycarboxyliques cycliques et de lactames ou de polyamides à des températures de 0 à 400°C, et, le cas échéant, dans un solvant, caractérisé en ce que la condensation est effectuée avec adjonction de 0,1 à 10% en valence d'un acide imidocarboxylique de formule (I)

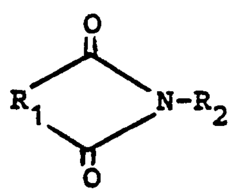

(I),

dans laquelle $R_1$ et $R_2$ désignent des restes aliphatiques, aliphato-aromatiques ou aromatiques et dans laquelle $R_1$, à côté du groupe imido cyclique, porte encore au moins un groupe anhydride cyclique ou carboxyle.

2. Procédé de production de polyamide-imides suivant la revendication 1, caractérisé en ce que les polyamide-imides sont préparés dans une première étape dans un solvant, chauffés éventuellement sous pression ou après concentration à des températures de 200 à 250°C puis concentrés et condensés dans une extrudeuse à évaporation à des températures de 240 à 400°C, le cas échéant sous vide.

3. Procédé de production de polyamide-imides suivant la revendication 1, caractérisé en ce qu'on utilise comme acides imidocarboxyliques des composés de formule (II)

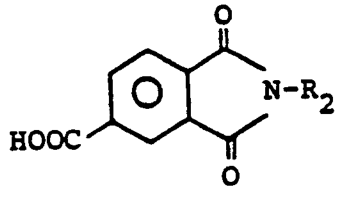

(II),

dans laquelle $R_2$ représente un reste aliphatique, aliphato-aromatique ou aromatique.

4. Polyamide-imides obtenus suivant la revendication 1.

5. Utilisation de polyamide-imides suivant la revendication 1 comme matières thermoplastiques.

## Claims

1. Process for the preparation of polyamidimides from polyisocyanates, cyclic polycarboxylic acid anhydrides and lactams or polyamides at temperatures from 0 to 400°C and optionally in a solvent, characterised in that condensation is carried out with the admixture of from 0.1 to 10 Vol% of an imido carboxylic acid corresponding to formula (I)

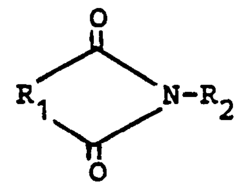

(I),

wherein $R^1$ and $R^2$ denote aliphatic, aliphatic-aromatic or aromatic groups and $R^1$ contains at least one cyclic anhydride group or carboxyl group in addition to the cyclic imide group.

2. Process for the preparation of polyamidimides according to Claim 1, characterised in that the polyamidimides are prepared in a first stage in a solvent and are optionally heated to temperatures from 200 to 250°C, optionally under pressure or after they have been concentrated, and are then concentrated in an evaporation extruder at temperatures from 240 to 400°C, optionally under vacuum, and condensed.

3. Process for the preparation of polyamidimides according to Claim 1, characterised in that the imido carboxylic acids used are compounds corresponding to formula (II)

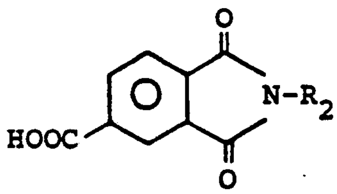

(II),

wherein $R_2$ denotes an aliphatic, aliphatic-aromatic or aromatic group.

4. Polyamidimides obtainable according to Claim 1.

5. Use of polyamidimides according to Claim 1 as thermoplasts.